# EUROPEAN PATENT SPECIFICATION

(11) **EP 3 620 362 B1**
(45) Date of publication and mention of the grant of the patent: **02.11.2022**
(21) Application number: 19195260.5
(22) Date of filing: 04.09.2019
(51) Int. Cl.: B62K 19/40, B62M 6/90, B62K 3/02

(54) **ELECTRIC BICYCLE**
ELEKTRISCHES FAHRRAD
VÉLO ÉLECTRIQUE

(30) Priority: 07.09.2018 JP 2018168207
(43) Date of publication of application: 11.03.2020
(73) Proprietor: Yamaha Hatsudoki Kabushiki Kaisha, Iwata-shi, Shizuoka 438-8501 (JP)
(72) Inventor: EGUCHI, Munemitsu, Iwata-shi, Shizuoka 438-8501 (JP)
(74) Representative: Grünecker Patent- und Rechtsanwälte PartG mbB

(56) References cited:
- WO-A1-2012/123455
- CN-A- 107 672 723
- DE-A1-102018 200 891
- DE-U1- 20 012 972
- DE-U1-202013 004 427
- DE-U1-202016 008 481
- FR-A1- 3 046 401
- JP-A- 2000 072 072
- US-A1- 2018 072 378

## Description

The present invention relates to an electric bicycle according to the preamble of independent claim 1. Such an electric bicycle is known from the prior art document DE 10 2018200 891 A1, which discloses the features of the preamble of claim 1.

Prior art document DE 10 2018200 891 A1 discloses an electric bicycle with a battery unit, a driving unit configured to transmit a driving force to a rear wheel, a head pipe and a down frame extending from the head pipe toward a diagonally lower rear direction of a vehicle body. The down frame includes a battery fixing unit having a battery compartment. The battery compartment is constituted by two side surface portions, a main surface portion and an end surface. Said side surface portions extending toward the diagonally lower rear direction of the vehicle body and are provided side by side in a width direction of the vehicle body. A battery housing is formed at least between the side surface portions of the battery compartment, wherein the battery has a shape extending in the extending direction of the side surface portions. The battery unit comprises a first support part supporting one end side in the extending direction of the battery and a second support part supporting the other end side in the extending direction of the battery. The battery is supported by a support part so as to be turnably about an axis extending in the width direction of the vehicle body between a position where the battery is arranged in the battery compartment and a position where the battery is detached from the battery compartment. A power feeding connector provided on the battery is first connected electrically to a power receiving connector provided in the support part, and after that, the battery turns about the axis in a state of being supported by the support part to the position where the battery is arranged in the battery compartment with the battery supported on said support part.

An electric bicycle housing a battery for supplying power to a motor is known. An electric bicycle provided with the battery behind a down tube is disclosed in JP H9-058563 A.

Here, in the electric bicycle disclosed in JP H9-058563 A, the disposed battery stands out and is not favorable in design, and further, there is room for improvement in a way of using a space where the battery is disposed.

It is the object of the present invention to provide an electric bicycle capable of using an area that houses a battery effectively and improving designability. According to the present invention said object is solved by an electric bicycle having the features of independent claim 1. Preferred embodiments are laid down in the dependent claims.

### BRIEF DESCRIPTION OF THE DRAWINGS

Fig. 1 is a side view showing the entire structure of an electric bicycle;
Fig. 2 is a top view showing the entire structure of the electric bicycle;
Fig. 3 is a perspective view showing a structure of a vehicle body frame and the periphery thereof;
Fig. 4 is a side view showing the structure of the vehicle body frame and the periphery thereof;
Fig. 5 is a front view showing the structure of the vehicle body frame and the periphery thereof;
Fig. 6 is a view for explaining a support structure of a battery and an arrangement procedure of the battery to the battery housing area;
Fig. 7 is a view for explaining the support structure of the battery and the arrangement procedure of the battery to the battery housing area;
Fig. 8 is a view for explaining the support structure of the battery and the arrangement procedure of the battery to the battery housing area;
Fig. 9 is a side view showing the battery arranged in the battery housing area according to a first modification example;
Fig. 10 is a view for explaining a support structure of the battery according to a second modification example;
Fig. 11 is a side view showing the battery housing area and the periphery thereof according to a third modification example;
Fig. 12 is a front view showing the battery arranged in the battery housing area according to a fourth modification example;
Fig. 13 is a front view showing the battery arranged in the battery housing area according to a fifth modification example; and
Fig. 14 is a cross-sectional view showing the battery and a down frame according to a sixth modification.

### DETAILED DESCRIPTION OF THE PREFERRED EMBODIMENTS

Hereinafter, an electric bicycle 100 according to a preferred embodiment (hereinafter referred to as the embodiment) will be explained with reference to the drawings.

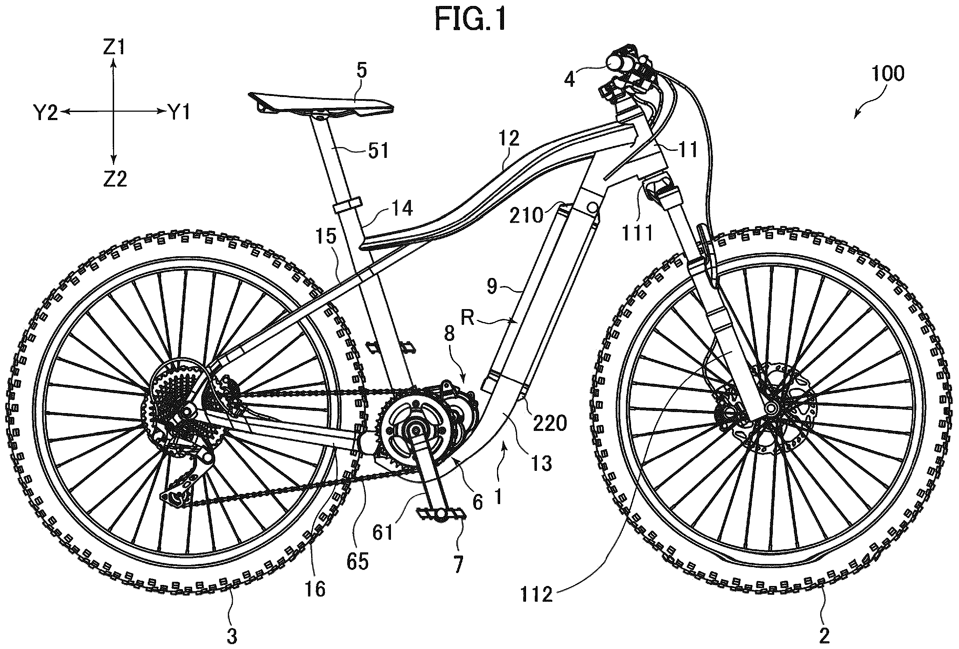

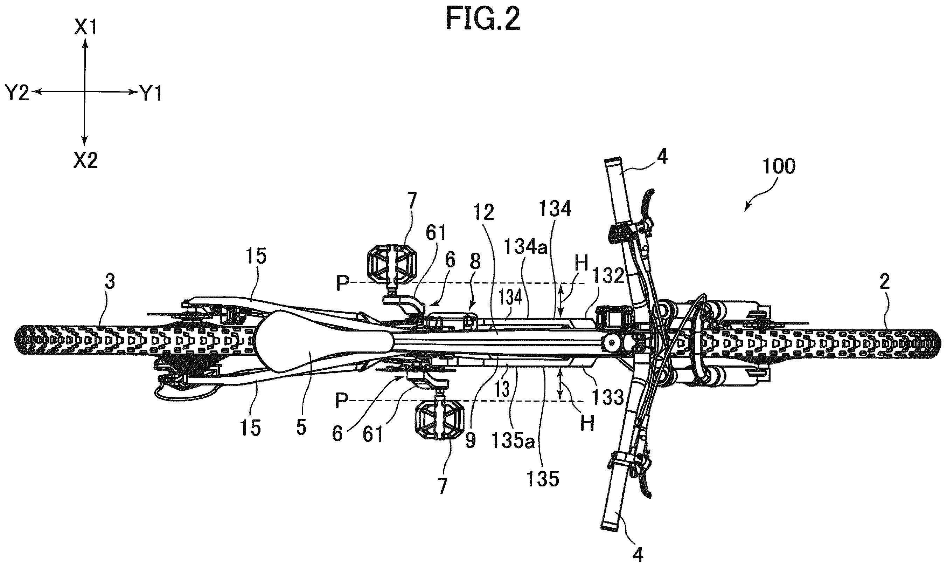

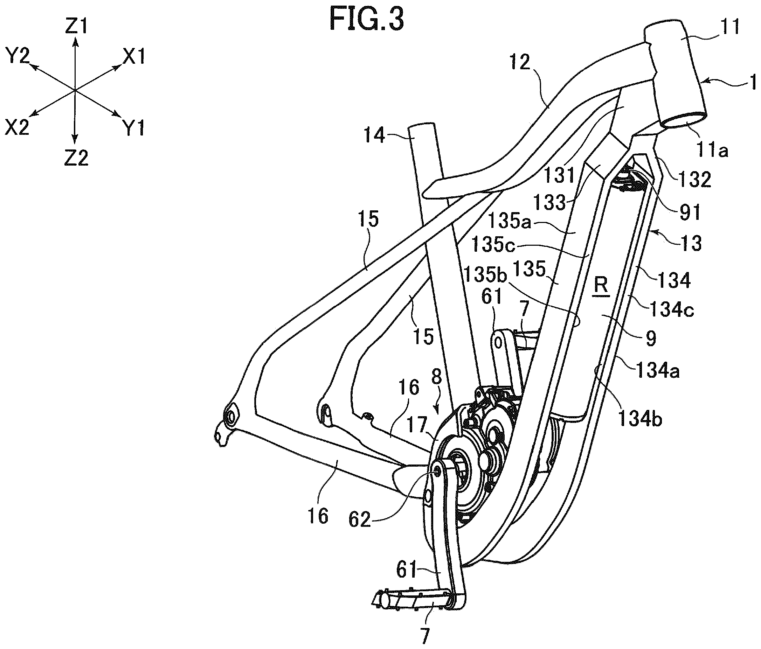

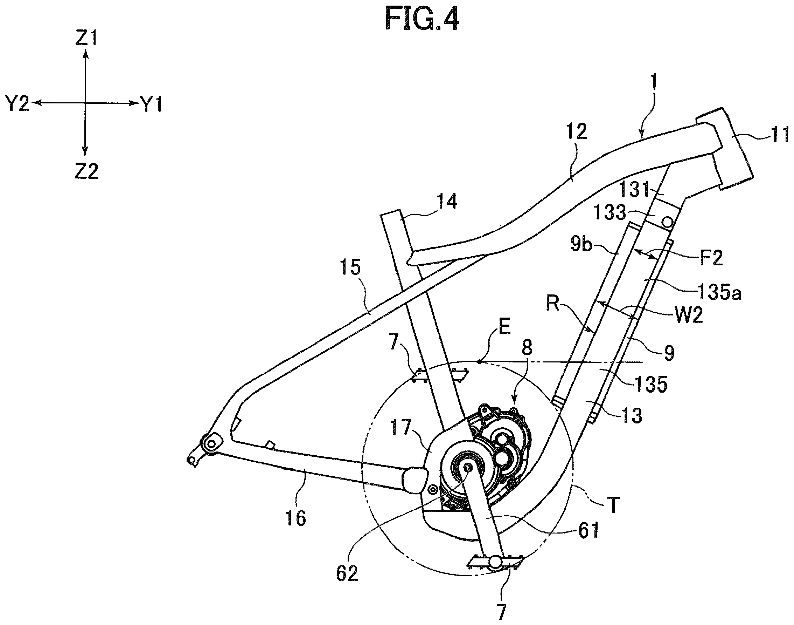

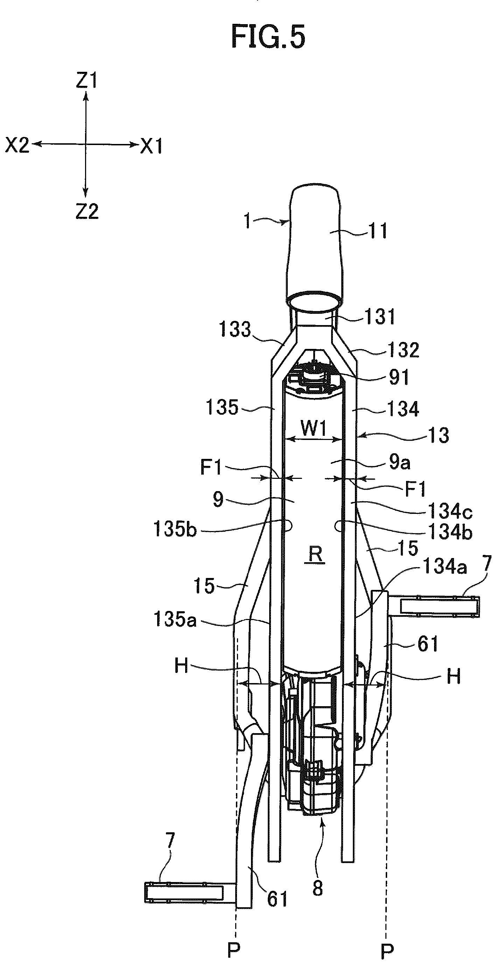

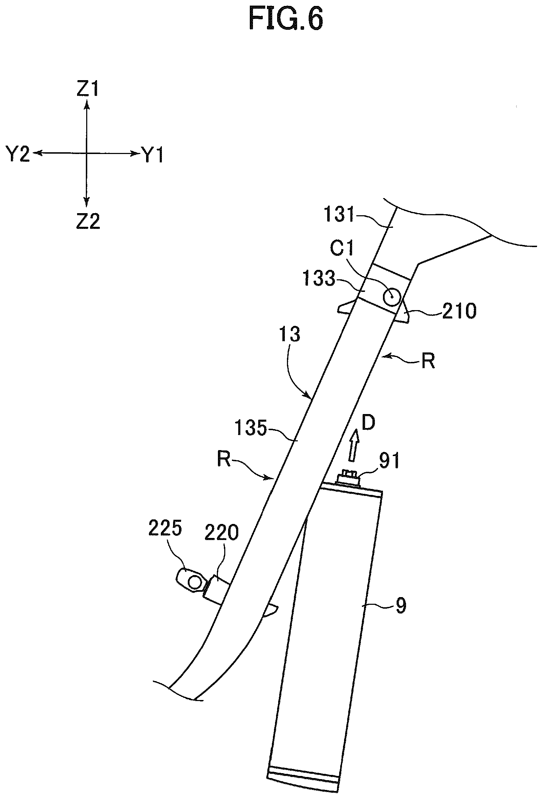

Fig. 1 is a side view showing the entire structure of an electric bicycle. Fig. 2 is a top view showing the entire structure of the electric bicycle. Fig. 3 is a perspective view showing a structure of a vehicle body frame and the periphery thereof. Fig. 4 is a side view showing the structure of the vehicle body frame and the periphery thereof. Fig. 5 is a front view showing the structure of the vehicle body frame and the periphery thereof. In Fig. 3 to Fig. 5, a first support part 210 and a second support part 220 shown in Fig. 6 and so on are not shown.

In the following description in Fig. 2 and so on, a direction shown by X1 is referred to as a left direction, a direction shown by X2 is referred to as a right direction and a direction of X1-X2 is referred to as a right and left direction. In the example, the right and left direction indicates a width direction of a vehicle body. Moreover, in Fig. 1 and so on, a direction shown by Y1 is referred to as a front direction, a direction shown by Y2 is referred to as a rear direction and a direction shown by Y1-Y2 is referred to as a front and rear direction. Also in Fig. 1 and so on, a direction shown by Z1 is referred to as an upper direction, a direction shown by Z2 is referred to as a lower direction and a direction shown by Z1-Z2 direction is referred to as an upper and lower direction.

### [Entire Structure]

The electric bicycle 100 is an electric bicycle traveling by transmitting a force to wheels, which is obtained by adding a driving force from a driving unit including an electric motor and the like to a tread force added to pedals by a rider.

As shown in Fig. 1 and Fig. 2, the electric bicycle 100 includes, as main components, a vehicle body frame 1, a front wheel 2, a rear wheel 3, handlebars 4, a saddle 5, a crank 6, pedals 7 and a driving unit 8. The electric bicycle 100 also includes a battery housing area R capable of housing a battery 9 supplying power to the driving unit 8.

As shown in Fig. 3 and so on, the vehicle body frame 1 includes a head pipe 11, a top frame 12, a down frame 13, a seat tube 14, a sheet stay 15, a chain stay 16 and a bracket 17.

The head pipe 11 is arranged at a front end of the vehicle body frame 1, having an insertion hole 11a into which a steering column 111 is inserted so as to rotate. As shown in Fig. 1, the handlebars 4 are arranged above the steering column 111, and a front fork 112 supporting the front wheel 2 so as to rotate is provided at a lower part of the steering column 111.

The top frame 12 extends from the head pipe 11 toward a diagonally lower rear direction, and a rear end thereof is connected to the seat tube 14. A cross-sectional shape of the top frame 12 in a section orthogonal to the extending direction of the top frame 12 may be a circular shape or a rectangular shape. The top frame 12 may be a hollow tubular member.

The down frame 13 extends from the head pipe 11 toward a diagonally lower rear direction at a position lower than the top frame 12, and a rear end thereof is connected to the bracket 17. The details in the structure of the down frame 13 will be described later.

A seat post 51 supporting the saddle 5 on which the rider sits is inserted to an upper end of the seat tube 14. The seat tube 14 extends toward a diagonally lower front direction, and a lower end thereof is connected to the bracket 17.

The seat stay 15 is provided so as to extend from the top frame 12 toward a diagonally lower rear direction. The chain stay 16 is provided so as to extend from the bracket 17 toward a rear direction. A lower end of the seat stay 15 is connected to a rear end of the chain stay 16, and the rear wheel 3 is supported at the connected position so as to rotate.

The crank 6 includes a crank shaft 62 extending in the width direction of the vehicle body and crank arms 61 rotating about the crank shaft 62. The pedals 7 are attached to tip ends of the crank arms 61. The crank arms 61 and the crank shaft 62 rotate by the tread force added to the pedals 7 by the rider, and a rotation force thereof is transmitted to the rear wheel 3 through a chain 65.

The driving unit 8 includes the electric motor and so on, which is held by the bracket 17.

The driving unit 8 transmits the driving force as auxiliary power to the rear wheel 3. The electric bicycle 100 travels by resultant power of the driving force from the driving unit 8 and the tread force added to the pedals 7 by the rider. However, the electric bicycle 100 may travel only by the tread force added to the pedals 7 by the rider as well as may travel only the driving force from the driving unit 8. A case where the driving force is transmitted to the rear wheel 3 from the driving unit 8 is shown in the example, however, the present teaching is not limited to this, and the driving force may be transmitted to at least any one of the front wheel 2 and the rear wheel 3.

### [Details of Structure of Down Frame]

The details of the down frame according to the example will be explained mainly with reference to Fig. 3.

The down frame 13 includes a base 131, a first connection part 132, a second connection part 133, a first extension part 134 and a second extension part 135.

The base 131 is connected to the head pipe 11, and is provided so as to extend from the head pipe 11 toward a diagonally lower rear direction of the vehicle body.

The first connection part 132 extends from the base 131 toward the diagonally lower rear direction of the vehicle body, and is provided so as to connect the base 131 to the first extension part 134.

The second connection part 133 extends from the base 131 toward the diagonally lower rear direction of the vehicle body, and is provided so as to connect the base 131 to the second extension part 135.

The first connection part 132 and the second connection part 133 have a shape expanding in the width direction of the vehicle body so as to be apart from each other. That is, the first connection part 132 is inclined to the left direction so as to be apart from the second connection part 133 as extending toward the diagonally lower rear direction of the vehicle body, and the second connection part 133 is inclined to the right direction so as to be apart from the first connection part 132 as extending toward the diagonally lower rear direction of the vehicle body.

The first extension part 134 is provided so as to extend from a lower end of the first connection part 132 toward the diagonally lower rear direction of the vehicle body.

The second extension part 135 extends from a lower end of the second connection part 133 toward the diagonally lower rear direction of the vehicle body and is provided side by side with the first extension part 134 in the width direction of the vehicle body.

In the example the down frame 13 has one base 131 as shown in Fig. 3. A part connected to the head pipe 11 in the down frame 13 is only the base 131, and therefore, the down frame 13 can be connected to the head pipe 11 without increasing a diameter of the head pipe 11 unnecessarily. Moreover, the structure in which only one base 131 is connected to the head pipe 11 is adopted, which facilitates connection work of the down frame 13 with respect to the head pipe 11. The connection of the down frame 13 with respect to the head pipe 11 is preferably performed by, for example, welding or the like. It is also possible to adopt a structure in which the down frame 13 does not have the base 131, and the first connection part 132 and the second connection part 133 are connected to the head pipe 11.

As the down frame 13 having two extension parts (the first extension part 1 34 and the second extension part 135) is adopted in the example, sufficient strength and rigidity can be secured without increasing a diameter of each frame.

Also in the example, the first extension part 134 and the second extension part 135 have a rectangular parallelepiped shape. That is, a cross-sectional shape of the first extension part 134 and the second extension part 135 in a section orthogonal to the extending direction of the first extension part 134 and the second extension part 135 is a rectangular shape. In the claimed embodiment, the cross-sectional shape of the first extension part 134 and the second extension part 135 in the section orthogonal to the extending direction is limited to a circular shape, or an oval shape

The first extension part 134 includes an outer surface 134a, an inner surface 134b, a front surface 134c and a rear surface as shown in Fig. 3 and so on. Similarly, the second extension part 135 includes an outer surface 135a, an inner surface 135b, a front surface 135c and a rear surface. The rear surface of the first extension part 134 is a surface on the back side of the front surface 134c and the rear surface of the second extension part 135 is a surface on the back side of the front surface 135c, but, symbols are not added as they are not shown in the drawings.

Broken lines in Fig. 2 and Fig. 5 show part of traces P of the innermost planes of the pedals 7. When a length H between the trace P of the innermost plane in the pedal 7 and an outer surface 134a/135a of the down frame 13 is short, legs of the rider are close to the down frame 13 at the time of treading the pedals 7, and it becomes difficult to tread the pedals 7. Accordingly, a width F1 of the front surface 134c and the rear surface (see Fig. 5) is formed to be narrower than a width F2 of the outer surface 134a and the inner surface 134b (see Fig. 4) in the first extension part 134. Similarly, a width of the front surface 135c and the rear surface is formed to be narrower than a width of the outer surface 135a and the inner surface 135b in the second extension part 135. That is, the cross-sectional shape of the first extension part 134 and the second extension part 135 in the section orthogonal to the extending direction of the first extension part 134 and the second extension part 135 is the rectangular shape and a direction in which a short side of the rectangular shape is the width direction of the vehicle body. When such structure is adopted, a width of the down frame 13 in the width direction of the vehicle body can be narrowed. Accordingly, it is possible to avoid interference with the down frame 13 at the time of treading the pedals 7 by the rider.

As the first extension part 134 and the second extension part 135 have the rectangular parallelepiped shape, the diameter of the first extension part 134 and the second extension part 135 can be reduced while securing areas of surfaces facing the battery 9 (the inner surfaces 134b, 135b) as compared with a case where these parts have a columnar shape. As a result, a posture of the battery 9 arranged between the first extension part 134 and the second extension part 135 can be stabilized and a width of the down frame 13 in the width direction of the vehicle body can be narrowed.

### [Battery]

The battery 9 stores power to be supplied to the driving unit 8. The battery 9 may be charged by using a cable connected to an external outlet in a state where the battery 9 is attached to the electric bicycle 100, or may be charged by installing the battery 9 in an external charger in a state where the battery 9 is detached from the electric bicycle 100.

In the example, a shape of the battery 9 is an approximately rectangular parallelepiped shape extending along a direction in which the first extension part 134 and the second extension part 135 extend. The battery 9 includes a first side surface 9a having a first width W1 (see Fig. 5) and a second side surface 9b having a second width W2 (see Fig. 4) wider than the first width W1. Then, the battery 9 is arranged in a battery housing area R so that the first side surface 9a is parallel to the width direction of the vehicle body. That is, the first side surface 9a is a surface parallel to a direction in which the crank shaft 62 extends. Accordingly, the width of the battery 9 in the battery housing area R in the width direction of the vehicle body can be narrowed. Therefore, it is possible to avoid interference with the battery 9 and the down frame 13 at the time of treading the pedals 7 by the rider.

### [Battery Housing Area]

The battery housing area R of the electric bicycle 100 according to the embodiment will be explained mainly with reference to Fig. 3 to Fig. 5.

The battery 9 is formed so as to be attachable/detachable to/from the electric bicycle 100. The electric bicycle 100 has the battery housing area R capable of housing the battery 9. In the embodiment, part of the battery housing area R is formed between the first extension part 134 and the second extension part 135.

The battery housing area R is an area where the battery 9 exists in a state where the battery 9 is supported by a later-described first support part 210 and the second support part 220. The state where the battery 9 is arranged in the battery housing area R is shown in Fig. 1 to Fig. 5.

As described above, the first connection part 132 and the second connection part 133 have a shape expanding in the width direction of the vehicle body so as to be apart from each other in the down frame 13 as described above. As such structure is adopted, the first extension part 134 and the second extension part 135 are arranged apart from each other, and therefore, the battery housing area R can be sufficiently secured.

In the embodiment, the width of the first extension part 134 and the second extension part 135 (the width F2 of the outer surface 134a, the inner surface 134b, the outer surface 135a and the inner surface 135b) is narrower than the width of the second side surface 9b (the second width W2) of the battery 9 in side view of the vehicle body. Accordingly, the first extension part 134 and the second extension part 135 can look thin, which improves designability.

Though the example in which the width F2 of the outer surface 134a and the inner surface 134b in the first extension part 134 is narrower than the second width W2 of the second side surface 9b of the battery 9 is indicated in the embodiment, the present teaching is not limited to this as far as the width of the first extension part 134 is narrower than the width of the battery 9 in side view of the vehicle body. That is, the structure in which only part of the battery 9 is hidden by the first extension part 134 in side view of the vehicle body regardless of the shape of the first extension part 134 and the battery 9. The same applies to the second extension part 135.

Moreover, the battery 9 is arranged in the battery housing area R so that at least part of the battery 9 is positioned on a lower side than an upper end E in a vertical direction (Z1 direction in the drawings) of a rotation trace T of the pedal 7 in side view of the vehicle body as shown in Fig. 4 in the embodiment. That is, the battery housing area R is formed at the position close to the crank shaft 62 in the upper and lower direction. Accordingly, when the battery 9 is arranged in the battery housing area R, a lifting amount of the battery 9 by a user is reduced, which facilitates attachment of the battery 9 with respect to the electric bicycle 100. Furthermore, the battery 9 that is heavy in weight is arranged at a lower part of the electric bicycle 100, and therefore, the center of gravity of the electric bicycle 100 becomes low. Accordingly, traveling of the electric bicycle 100 becomes stable.

### [Support Structure of Battery, and Arrangement Procedure of Battery to Battery Housing Area]

Fig. 6 to Fig. 8 are views for explaining a support structure of the battery and an arrangement procedure of the battery to the battery housing area in the embodiment according to the subject matter of the independent claim. In Fig. 6 to Fig. 8, part of the down frame 13 and the battery 9 in side view of the vehicle body are shown.

The electric bicycle 100 includes the first support part 210 supporting the upper end of the battery 9 and the second support part 220 supporting a lower end of the battery 9. In the embodiment, the first support part 210 is formed between the first connection part 132 and the second connection part 133, and the second support part 220 is formed between the first extension part 134 and the second extension part 135.

The first support part 210 supports the battery 9 turnably about an axis C1 extending in the width direction of the vehicle body between a position where the battery 9 is arranged in the battery housing area R and a position where the battery 9 is detached from the battery housing area R. Turning of the first support part 210 may be performed by, for example, providing a hinge or the like in the down frame 13.

Hereinafter, the arrangement procedure of the battery 9 to the battery housing area R according to the embodiment will be explained. First, as shown in Fig. 6, the battery 9 is arranged in a front and lower direction of the first extension part 134 and the second extension part 135 and lifted from the lower direction to the upper direction (direction of an arrow D), to allow an upper end of the battery 9 to abut on the first support part 210. At this time, a power feeding connector 91 provided on the upper end of the battery 9 is preferably connected electrically to a power receiving connector (not shown) provided in the first support part 210.

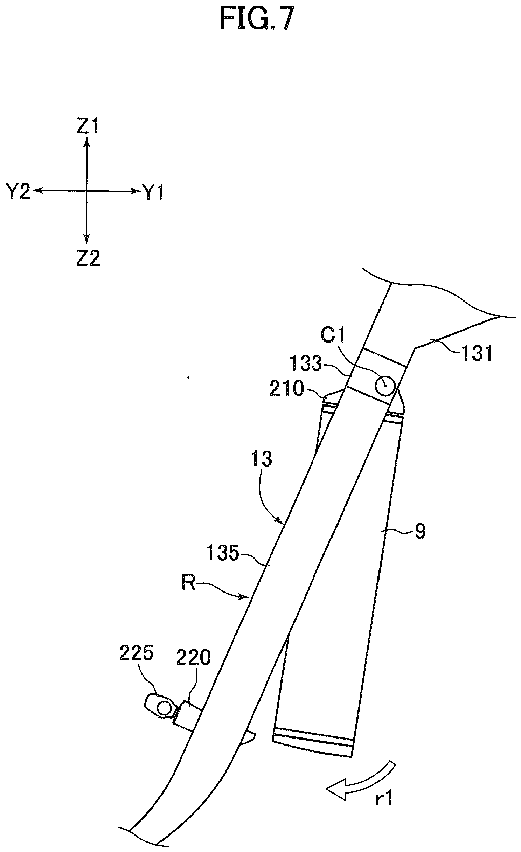

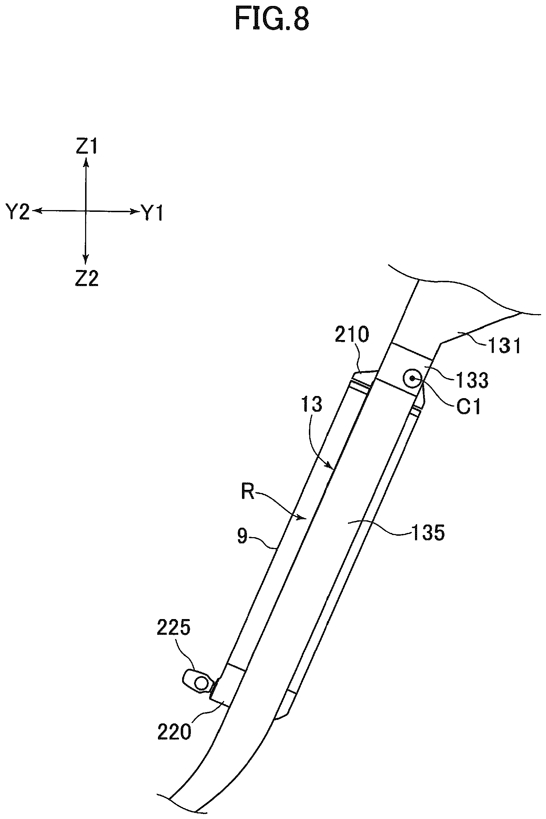

After that, a lower end of the battery 9 is pushed from the front direction to a rear direction (direction of an arrow r1) as shown in Fig. 7. Accordingly, the battery 9 turns about the axis C1 in a state of being supported by the first support part 210. Then, the lower end of the battery 9 is placed on the second support part 220. Accordingly, the battery 9 is arranged in the battery housing area R as shown in Fig. 8.

In the embodiment, the structure in which only the upper end and the lower end of the battery 9 are supported by the first support part 210 and the second support part 220 is adopted. Accordingly, a physical load is not applied to portions other than the upper end and the lower end of the battery 9.

Also in the embodiment, a lock mechanism is provided in the second support part 220. Specifically, a key hole (not shown) is provided in the second support part 220 and a key 225 is turned clockwise or counterclockwise in a state where the key 225 is inserted into the key hole, thereby fixing the lower end of the battery 9 to the second support part 220. As the battery 9 is fixed to the down frame 13 through the second support part 220 as described above, it is possible to suppress the battery 9 falling off the electric bicycle 100.

In the embodiment, the battery 9 is inserted from the front side of the vehicle body between the first extension part 134 and the second extension part 135 to be arranged in the battery housing arear R. Here, it can be considered that the battery 9 is arranged in the battery housing area R from the rear side of the vehicle body, but, there is a case where it is difficult to secure a sufficient space according to a layout of the vehicle body frame 1 such as the top frame 12 and the seat tube 14. As the structure in which the battery 9 is arranged in the battery housing area R from the front side of the vehicles body is adopted in the embodiment as described above, the battery 9 can be attached to the electric bicycle 100 easily regardless of the arrangement in the vehicle body frame 1. Also, the structure in which the battery 9 is arranged in the battery housing area R from the front side of the vehicle body is adopted, thereby improving the degree of freedom in the layout of the vehicle body frame 1 such as the top frame 12 and the seat tube 14.

When the battery 9 is arranged in the battery housing area R from the rear side of the vehicle body, namely, from the rear direction as well as the upper direction of the down frame 13, a height of the battery 9 lifted by the user becomes high, which may be a large burden to the user depending on the weight of the battery 9. On the other hand, in the structure of the embodiment in which the battery 9 is arranged in the battery housing area R from the front side, the lifting amount of the battery by the user is small, and it is easy to attach the battery 9 to the electric bicycle 100.

The removal of the battery 9 from the electric bicycle 100 is preferably performed by the reverse operation to the above procedure. That is, after the locking by the key 225 is released, the lower end of the battery 9 is pushed in the opposite direction to the direction of the arrow r1 about the axis C1, then, the battery 9 is preferably moved downward so that the power feeding connector 91 is separated from the first support part 210.

When the above support structure is adopted, the battery 9 can be attached/detached easily as compared with a structure in which the battery 9 is fixed to the down frame 13 by using screws or the like.

Though the structure in which the first support part 210 supports the upper end of the battery 9 so as to turn is adopted in the embodiment, the present teaching is not limited to this, and a structure in which the second support part 220 supports the lower end of the battery 9 so as to turn may be adopted. Also, the structure in which the power feeding connector 91 is provided at the upper end of the battery 9 is adopted in the embodiment, but, the present teaching is not limited to this. A structure in which the power feeding connector 91 is provided at the lower end of the battery 9 and the power receiving connector is provided at the second support part 220 may be adopted. When the power feeding connector 91 is provided at the lower end of the battery 9, a position where the battery 9 is electrically connected to the electric bicycle 100 is arranged near the driving unit 8, which can supply power from the battery 9 to the driving unit 8 efficiently.

As explained above, part of the battery housing area R is formed between the first extension part 134 and the second extension part 135 in the electric bicycle 100 according to the embodiment, and therefore, part of the battery 9 is hidden by the first extension part 134 and the second extension part 135 in the state of being arranged in the battery housing area R. Accordingly, the battery 9 does not stand out in appearance unnecessarily and designability is improved. Moreover, the area between the first extension part 134 and the second extension part 135 is set as the battery housing area R, and therefore, the space in the electric bicycle 100 can be used effectively. As the structure in which the widths of the down frame 13 and the battery 9 are not increased in the width direction of the vehicle body while using the space effectively is adopted, the interference with the battery 9 and the down frame 13 can be avoided when the rider treads the pedals 7, which gives comfortable ride to the rider.

Hereinafter, modification examples of the embodiment will be explained. The same symbols are given to the same components as the components explained with reference to Fig. 1 to Fig. 8, and explanation thereof is omitted.

### [First Modification Example]

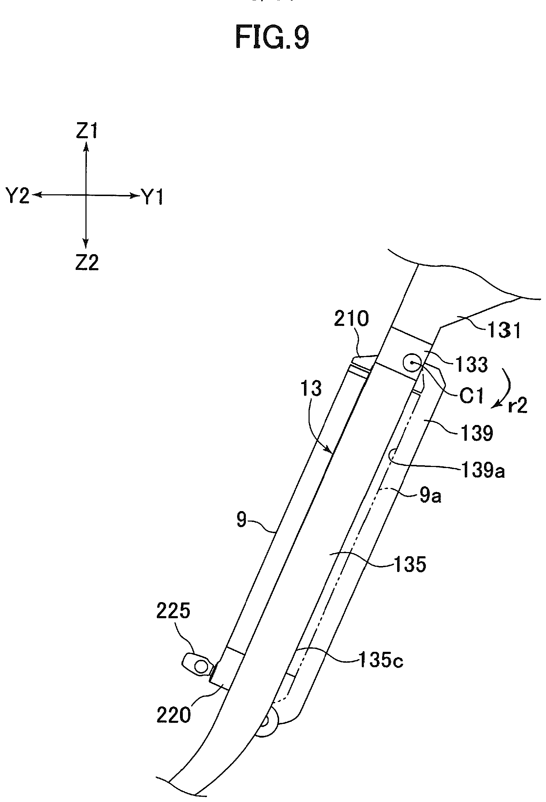

Fig. 9 is a side view showing the battery arranged in the batter housing area according to a first modification example as an alternative embodiment.

The electric bicycle 100 according to the first modification example includes a cover member 139. The cover member 139 is preferably provided in the front surface 134c of the first extension part 134 and the front surface 135c of the second extension part 135 so as to cover the surface (side surface 9a) on the front side of the battery 9 arranged in the battery housing area R.

The cover member 139 includes a pivot part provided in a lower end and a lock part provided in an upper end. The pivot part has a function of turning the cover member 139 about an axis extending in the width direction of the vehicle body. The lock part has a function of fixing the cover member 139 to the down frame 13 and a function of releasing the fixing. Then, the cover member 139 is preferably supported by the down frame 13 so as to turn about the axis extending in the width direction of the vehicle body between a position of exposing the battery housing area R and a position of covering the battery housing area R in front view. It is preferable that an upper part of the cover member 139 is turned in a direction of an arrow r2 in Fig. 9 so as to expose the battery housing area R at the time of arranging the battery 9 in the battery housing area R and at the time of detaching the battery 9 from the battery housing area R. On the other hand, when the electric bicycle 100 travels, the upper part of the cover member 139 is preferably turned in the opposite direction to the direction of the arrow r2 in Fig. 9 so as to cover the battery housing area R.

The present teaching is not limited to the structure shown in Fig. 9 and the cover member 139 may have the pivot part provided in the upper end and the lock member in the lower end. That is, the structure in which the upper end of the cover member 139 is supported so as to turn may be adopted. When such structure is adopted, the battery 9 can be arranged in the battery housing area R without increasing a turning angle of the cover member 139 as compared with the structure in which the pivot part is provided in the lower end.

Fig. 9 shows a state in which the cover member 139 is in the position of covering the battery housing area R and the battery 9 is arranged in the battery housing area R. It is preferable that a surface 139a on an inner side of the cover member 139 supports the surface (side surface 9a) on the front side of the battery 9 in this state. It is also preferable to adopt a structure in which an elastic member or the like is provided on the surface 139a on the inner side of the cover member 139 and the elastic member contacts the side surface 9a of the battery 9. Accordingly, the shock on the battery 9 is absorbed by the elastic member and the load applied to the battery 9 can be reduced when the electric bicycle 100 travels. As the elastic member, for example, a spring member or the like for biasing the side surface 9a of the battery 9 with a suitable force may be used.

When the cover member 139 is provided, the battery 9 is protected from flying gravel and so on during traveling of the electric bicycle 100. In a case where the battery 9 is detached from the first support part 210 and the second support part 220 due to some trouble, it is possible to prevent the battery 9 from falling off to the ground.

The cover member 139 is preferably formed of, for example, a resinous material. The cover member 139 may be configured so as to be attachable/detachable to/from the electric bicycle 100.

It is also preferable that a plurality of holes are formed, that a louver structure is formed and that a mesh structure is formed on the surface of the cover member 139. Accordingly, it is possible to suppress accumulation of heat of the battery 9 in the battery housing area R. As a result, cooling performance of the battery 9 can be improved.

### [Second Modification Example]

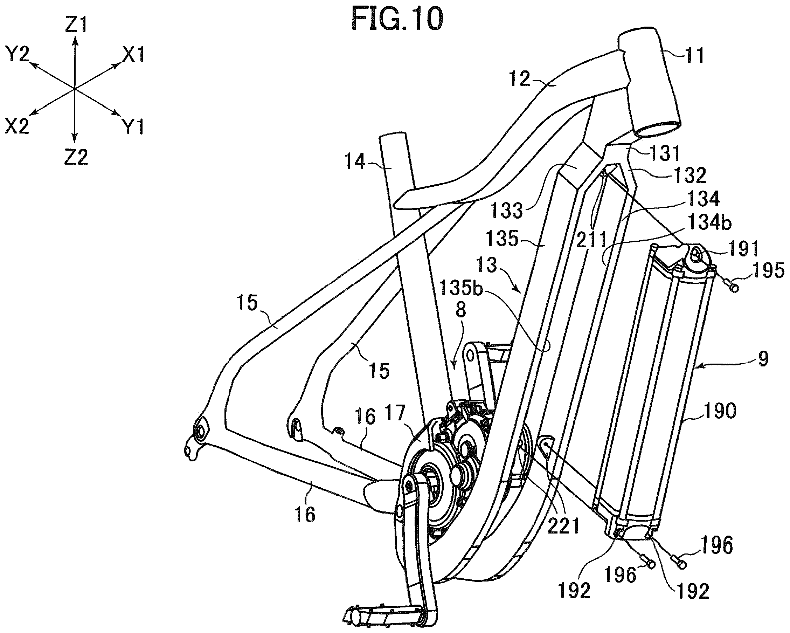

Fig. 10 is a view for explaining a support structure of the battery according to a second modification example as an alternative example.

The support structure of the battery 9 arranged in the battery housing area R is not limited to the structures shown in Fig. 6 to Fig. 8. In the second modification example, the battery 9 arranged in the battery housing area R is fixed to the down frame 13 by using screws 195 and 196. Specifically, a first support part 211 having a screw hole is formed in the base 131 of the down frame 13, and second support parts 221 having screw holes are formed in the inner surfaces 134b and 135b of the first extension part 134 and the second extension part 135.

Also in the second modification example, a battery frame 190 housing the battery 9 thereinside and having screw holes 191 and 192 is used. Then, the screw hole 191 of the battery frame 190 is allowed to overlap with the screw hole of the first support part 211, and the screw 195 is inserted into these screw holes, thereby fixing the battery frame 190 to the first support part 211. Moreover, the screw holes 192 of the battery frame 190 are allowed to overlap with the screw holes of the second support parts 221, and the screws 196 are inserted into these screw holes, thereby fixing the battery frame 190 to the second support parts 221.

When the battery 9 is fixed to the down frame 13 by using the screws as in the second modification example, the possibility that the battery 9 falls off the electric bicycle 100 can be further reduced. Moreover, the battery frame 190 is used instead of attaching the battery 9 directly to the electric bicycle 100, and therefore, the battery 9 can be protected from flying gravel and so on without providing the above-described cover member 139 and so on. Though the battery frame 190 configured so as to cover the entire battery 9 is shown in Fig. 10, the present teaching is not limited to this, and the battery frame 190 may have a structure in which part of the battery 9 is exposed. When the same structure as the support structure shown in Fig. 6 to Fig. 8 is adopted in the case where the battery frame 190 is used, the first support part 210 may support the battery frame 190 so as to turn.

Though the example of using the screws is shown in Fig. 10, the present teaching is not limited to this, and a structure in which the battery 9 is fixed to the down frame 13 by using other fixtures such as bolts and the like may be adopted.

### [Third Modification Example]

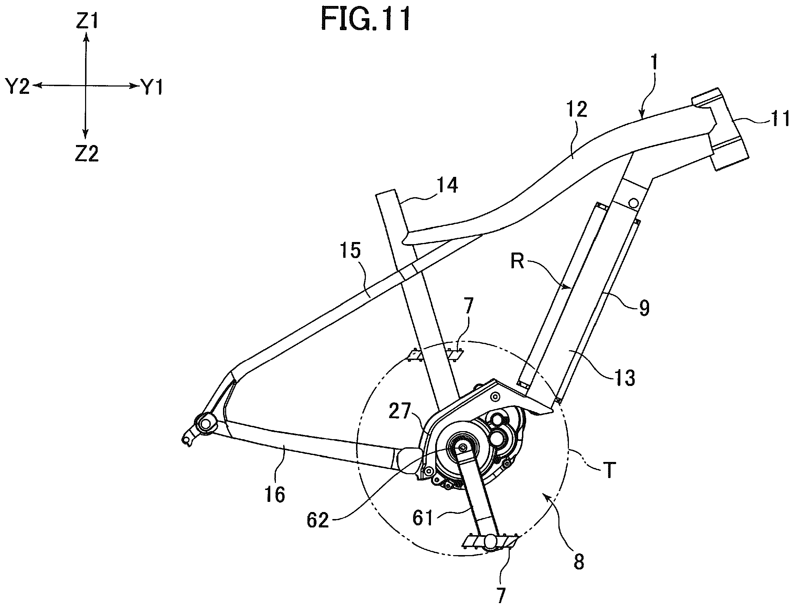

Fig. 11 is a side view showing the battery housing area and the periphery thereof according to a third modification example related to further features of the example.

In the third modification example, a bracket 27 to which the lower end of the down frame 13 is connected is arranged at an upper part of the driving unit 8 as shown in Fig. 11. When such structure is adopted, a distance between the crank shaft 62 and the battery 9 arranged in the battery housing area R can be closer as compared with the structure shown in Fig. 4. Specifically, the battery 9 is arranged in the battery housing area R so that at least part of the battery 9 overlaps with the rotation trace T of the pedal 7 in side view of the vehicle body as shown in Fig. 11. Accordingly, the battery housing area R can be formed in a still lower part. Therefore, the lifting amount of the battery 9 by the user is reduced at the time of arranging the battery 9 in the battery housing area R, which facilitates attachment of the battery 9 with respect to the electric bicycle 100.

### [Fourth Modification Example]

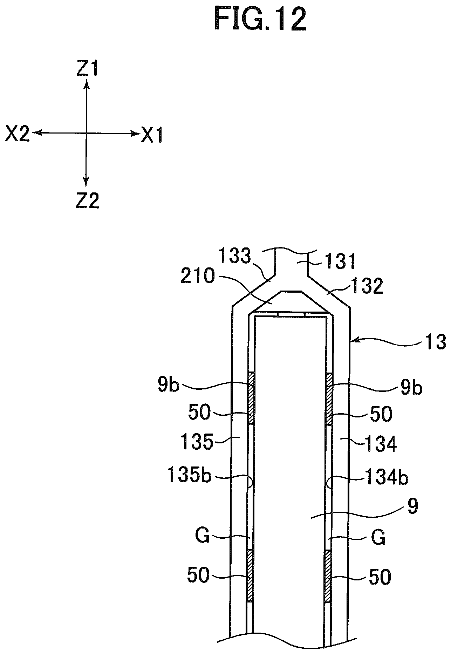

Fig. 12 is a front view showing the battery arranged in the battery housing area according to a fourth modification example related to further features of the embodiment.

In Fig. 5, the example in which the battery 9 is arranged in the battery housing area R without a gap with respect to the first extension part 134 and the second extension part 135 has been explained. In the fourth modification example, an example in which the battery 9 is arranged in the battery housing arear R so that gaps G are formed with respect to the first extension part 134 and the second extension part 135 in the width direction of the vehicle body will be explained.

As the gaps G opening in a traveling direction of the electric bicycle 100 are formed in the fourth modification example, wind passes through the gaps G during traveling of the electric bicycle 100. Accordingly, accumulation of heat in the battery housing area R is suppressed and cooling performance of the battery 9 is improved.

Also in the fourth modification example, a shock absorbing member 50 is provided in the gaps G as shown in Fig. 12. The shock absorbing member 50 is preferably formed of a material absorbing the shock. When the shock absorbing member 50 is formed, the battery 9 contacts the first extension part 134 and the second extension part 135 during traveling of the electric bicycle 100 or in other cases, thereby suppressing a load on the battery 9. Moreover, a posture of the battery 9 can be stabilized by providing the shock absorbing member 50 so as to contact the battery 9.

The shock absorbing member 50 may be provided on the side surface 9b of the battery 9, or may be provided on the inner surfaces 134b and 135b of the first extension part 134 and the second extension part 135. The shock absorbing member 50 is not limited to one provided at part of the gaps G between the battery 9 and the first extension part 134/the second extension part 135, and may be provided so as to fill the entire gaps G.

### [Fifth Modification Example]

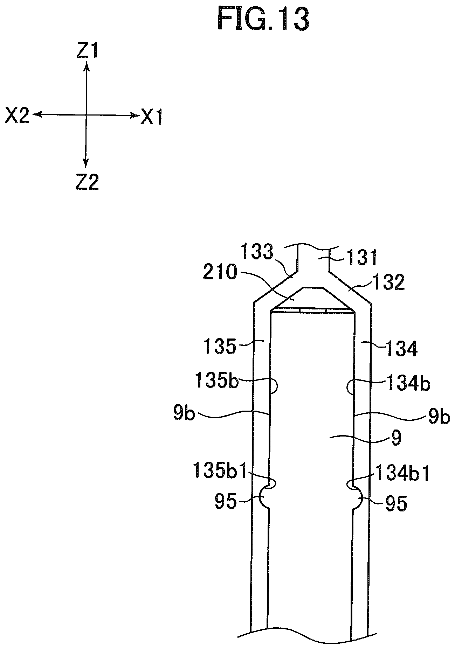

Fig. 13 is a front view showing the battery arranged in the battery housing area according to a fifth modification example related to further features of the embodiment. In Fig. 5 and the like, the example in which the shape of the battery 9 is the approximately rectangular parallelepiped shape having the side surfaces 9a and the side surfaces 9b has been explained, but the present teaching is not limited to this. In the fifth modification example, an example in which the battery 9 has convex parts 95 at part thereof will be explained.

It is preferable that the inner surfaces 134b and 135b of the first extension part 134 and the second extension part 135 have shapes extending along the side surfaces 9b of the battery 9 regardless of the shape of the battery 9. That is, when the battery 9 has the convex parts 95, it is preferable that the inner surface 134b of the first extension part 134 has a concave part 134b1 so as to be curved along the shape of the convex part 95 and that the inner surface 135b of the second extension part 135 has a concave part 135b1 so as to be curved along the shape of the convex part 95. According to such shape, the battery 9 is fitted between the first extension part 134 and the second extension part 135 in the state where the battery 9 is arranged in the battery housing area R, which stabilizes the posture of the battery 9.

Also in the fifth modification example, a structure in which the side surface 9b of the battery 9 contacts the inner surface 134b of the first extension part 134 and the inner surface 135b of the second extension part 135 in the state where the battery 9 is arranged in the battery housing area R is adopted. Accordingly, the battery 9 is allowed to contact the first extension part 134 and the second extension part 135, which makes it possible to transmit heat of the battery 9 to the down frame 13 and to improve cooling performance of the battery 9. It is also preferable to adopt a structure in which the battery 9 contacts the first extension part 134 and the second extension part 135 at least at one part and there are gaps at the other parts as shown in Fig. 12.

### [Sixth Modification Example]

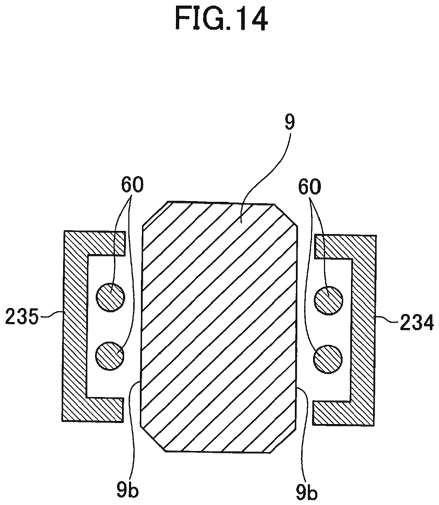

Fig. 14 is a cross-sectional view showing the battery and a down frame according to a sixth modification example related to further features of the example.

The first extension part 134 and the second extension part 135 having a rectangular shape are shown in Fig. 3 and the like, but, the shape of the first extension part 134 and the second extension part 135 is not limited to that. In the sixth modification example, a cross-sectional shape in a section orthogonal to an extending direction of a first extension part 234 is formed in an approximately U-shape. That is, both end parts of the first extension part 234 protrude in sectional view. A side having protruding shapes faces the battery 9. The same applies to a second extension part 235. When the first extension part 234 and the second extension part 235 are formed in such shape, the down frame can be reduced in weight. Also in the sixth modification example, wirings 60 may be provided between the battery 9 and the first extension part 234/the second extension part 235 so as to extend along the extending direction of the first extension part 234 and the second extension part 235 as shown in Fig. 14. Accordingly, it is possible to suppress the wirings 60 from being exposed from the vehicle body frame 1, which improves designability. The wirings 60 may be power feeding lines and the like for supplying power from the battery 9 to the driving unit 8.

## Claims

1. An electric bicycle (100) comprising:
a front wheel (2);
a rear wheel (3);
a driving unit (8) configured to transmit a driving force to at least one of the front wheel (2) and the rear wheel (3);
a battery housing area (R) capable of housing a battery (9) configured to supply power to the driving unit (8);
a head pipe (11); and
a down frame (13) extending from the head pipe (11) toward a diagonally lower rear direction of a vehicle body,
wherein the down frame (13) includes a first extension part (134) extending toward the diagonally lower rear direction of the vehicle body and a second extension part (135) extending toward the diagonally lower rear direction of the vehicle body and provided side by side with the first extension part (134) in a width direction of the vehicle body, and
the battery housing area (R) is formed at least between the first extension part (134) and the second extension part (135), wherein the battery (9) has a shape extending in the extending direction of the first extension part (134) and the second extension part (135) and the electric bicycle (100) includes a first support part (210) supporting one end side in the extending direction of the battery (9) and a second support part (220) supporting the other end side in the extending direction of the battery (9), wherein any one of the first support part (210) and the second support part (220) supports the battery (9) so as to be turnably about an axis (C1) extending in the width direction of the vehicle body between a position where the battery (9) is arranged in the battery housing area (R) and a position where the battery (9) is detached from the battery housing area (R), wherein the battery (9) has a shape extending in the extending direction of the first extension part (134) and the second extension part (135) with a first width (W1) and a second width (W2), and is arranged in the battery housing area (R) so that a direction of the first width (W1) is parallel to the width direction of the vehicle body, wherein widths of the first extension part (134) and the second extension part (135) are narrower than the second width (W2) in side view of the vehicle body, and that the down frame (13) includes a base (131) connected to the head pipe (11), a first connection part (132) connecting the base (131) to the first extension part (134) and a second connection part (133) connecting the base (131) to the second extension part (135), and
the first connection part (132) and the second connection part (133) have a shape expanding in the width direction of the vehicle body so as to be apart from each other, and wherein the width F2) of the outer surface (134a), Z and the inner surface (134b) of the first extension part and the inner surface (135b) and the outer surface (135b) of the second extension part (135) is narrower than the second width (W2) of the battery (9) in a side view of the vehicle body, and in that a power feeder connector (91) provided on the battery (9) is first connected electrically to a power receiving connector provided in one of the first support part (210) or
the second support part (220), and after that, the battery (9) turns about the axis (C1) in a state of being supported by the one of the first support part (210) or
the second support part (220) to the position where the battery (9) is arranged in the battery housing area (R) with the battery (9) supported on said support part (210,220) **characterized in that** the second width (W2) is wider than the first width (W1) of the battery (9) and **in that** the cross-sectional shape of the first extension part (134) and second extension part (135) in a direction orthogonal to the extending direction of the first extension part (134) and the second extension part (135) is a circular shape or an oval shape.

2. The electric bicycle (100) according to claim 1, **characterized in that,** in the first extension part (134) and the second extension part (135), at least part of surfaces (134b, 135b) on sides facing the battery (9) arranged in the battery housing area (R) is a flat surface.

3. The electric bicycle (100) according to any one of claims 1 or 2, **characterized in that** at least part of a cross-sectional shape of the first extension part (134) and the second extension part (135) in a section orthogonal to the extending direction of the first extension part (134) and the second extension part (135) is a rectangular shape, and a direction in which a short side of the rectangular shape extends is the width direction of the vehicle body.

4. The electric bicycle (100) according to claim 1, **characterized in that** the first support part (210) and the second support part (220) support the battery (9) so that gaps (G) are formed between the first extension part (134)/the second extension part (135) and the battery (9) in the width direction of the vehicle body.

5. The electric bicycle (100) according to claim 4, **characterized by:**
a shock absorbing member (50) provided in the gaps (G).

6. The electric bicycle (100) according to claim 1, **characterized in that** the first support part (210) and the second support part (220) support the battery (9) so that the first extension part (134) and the second extension part (135) contact at least part of the battery (9) in the width direction of the vehicle body.

7. The electric bicycle (100) according to any one of claims 1 to 6, **characterized by:** a cover member (90) covering a surface on the front side of the battery (9) arranged in the battery housing area (R).

8. The electric bicycle (100) according to any one of claims 1 to 7, **characterized in that** the battery (9) is arranged in the battery housing area (R) by being inserted between the first extension part (134) and the second extension part (135) from a front side of the vehicle body.

9. The electric bicycle (100) according to any one of claims 1 to 8, **characterized by:**
a crank shaft (62); and
pedals (7) rotating the crank shaft (62),
wherein the battery (9) is arranged in the battery housing area (R) so that at least part thereof is positioned on a lower side than an upper end in a vertical direction of a rotation trace (T) of the pedal (7) in side view of the vehicle body.

10. The electric bicycle (100) according to claim 9, **characterized in that** the battery (9) is arranged in the battery housing area (R) so that at least part thereof overlaps with the rotation trace (T) of the pedal (7) in side view of the vehicle body.

## Patentansprüche

1. Ein Elektro-Fahrrad (100), das umfasst:
ein Vorderrad (2);
ein Hinterrad (3);
eine Antriebseinheit (8), die konfiguriert ist, um eine Antriebskraft auf das Vorderrad (2) und/oder das Hinterrad (3) zuübertragen;
einen Batteriegehäusebereich (R), der eine Batterie (9) aufnehmen kann, die konfiguriert ist, um Strom zu der Antriebseinheit (8) zu liefern;
ein Kopfrohr (11); und
einen Unter-Rahmen (13), der sich von dem Kopfrohr (11) in Richtung einer schräg nach hinten verlaufenden Richtung eines Fahrzeugkörpers erstreckt,
wobei der Unter-Rahmen (13) einen ersten Verlängerungsteil (134), der sich in Richtung der diagonal unteren hinteren Richtung des Fahrzeugkörpers erstreckt, und einen zweiten Verlängerungsteil (135), der sich in Richtung der diagonal unteren hinteren Richtung des Fahrzeugkörpers erstreckt und Seite an Seite mit dem ersten Verlängerungsteil (134) in einer Breitenrichtung des Fahrzeugkörpers vorgesehen ist, beinhaltet, und
der Batteriegehäusebereich (R) zumindest zwischen dem ersten Verlängerungsteil (134) und dem zweiten Verlängerungsteil (135) ausgebildet ist, wobei die Batterie (9) eine Form aufweist, die sich in der Erstreckungsrichtung des ersten Verlängerungsteils (134) und des zweiten Verlängerungsteils (135) erstreckt, und das Elektro-Fahrrad (100) ein erstes Lagerteil (210), das eine Endseite in der Erstreckungsrichtung der Batterie (9) lagert, und ein zweites Lagerteil (220), das die andere Endseite in der Erstreckungsrichtung der Batterie (9) lagert, beinhaltet wobei irgendeines von dem ersten Lagerteil (210) und dem zweiten Lagerteil (220) die Batterie (9) lagert, so dass sie um eine Achse (C1) drehbar ist, die sich in der Breitenrichtung des Fahrzeugkörpers erstreckt, zwischen einer Position, in der die Batterie (9) in dem Batteriegehäusebereich (R) angeordnet ist, und einer Position, in der die Batterie (9) aus dem Batteriegehäusebereich (R) herausgenommen ist, wobei die Batterie (9) eine Form aufweist, die sich in der Erstreckungsrichtung des ersten Verlängerungsteils (134) und des zweiten Verlängerungsteils (135) mit einer ersten Breite (W1) und einer zweiten Breite (W2) erstreckt, und in dem Batteriegehäusebereich (R) angeordnet ist, so dass eine Richtung der ersten Breite (W1) parallel zu der Breitenrichtung des Fahrzeugkörpers ist, wobei die Breiten des ersten Verlängerungsteils (134) und des zweiten Verlängerungsteils (135) in der Seitenansicht des Fahrzeugkörpers schmaler sind als die zweite Breite (W2), und der Unter-Rahmen (13) eine Basis (131), die mit dem Kopfrohr (11) verbunden ist, ein erstes Verbindungsteil (132), das die Basis (131) mit dem ersten Verlängerungsteil (134) verbindet, und ein zweites Verbindungsteil (133), das die Basis (131) mit dem zweiten Verlängerungsteil (135) verbindet, beinhaltet, und
das erste Verbindungsteil (132) und das zweite Verbindungsteil (133) eine sich in der Breitenrichtung des Fahrzeugkörpers erweiternde Form aufweisen, so dass sie voneinander beabstandet sind, und wobei die Breite (F2) der Außenfläche (134a) und die Innenfläche (134b) des ersten Verlängerungsteils und die Innenfläche (135b) und die Außenfläche (135b) des zweiten Verlängerungsteils (135) schmaler ist als die zweite Breite (W2) der Batterie (9) in einer Seitenansicht des Fahrzeugkörpers, und dass ein an der Batterie (9) vorgesehener Stromzuführungsverbinder (91) zuerst elektrisch mit einem Stromaufnahmeverbinder verbunden wird, der in einem von dem ersten Lagerteil (210) oder dem zweiten Lagerteil (220) vorgesehen ist, und danach die Batterie (9) um die Achse (C1) in einem Zustand, in dem sie von dem einen des ersten Lagerteils (210) und des zweiten Lagerteils (220) gelagert wird, in die Position gedreht wird, in der die Batterie (9) in dem Batteriegehäusebereich (R) angeordnet ist, wobei die Batterie (9) auf dem Lagerteil (210, 220) gelagert wird, **dadurch gekennzeichnet, dass** die zweite Breite (W2) breiter ist als die erste Breite (W1) und dass die Querschnittsform des ersten Verlängerungsteils (134) und des zweiten Verlängerungsteils (135) in einer Richtung orthogonal zur Erstreckungsrichtung des ersten Verlängerungsteils (134) und des zweiten Verlängerungsteils (135) eine kreisförmige Form oder eine ovale Form ist.

2. Das Elektro-Fahrrad (100) gemäß Anspruch 1, **dadurch gekennzeichnet, dass** bei dem ersten Verlängerungsteil (134) und dem zweiten Verlängerungsteil (135) zumindest ein Teil der Flächen (134b, 135b) auf den der im Batteriegehäusebereich (R) angeordneten Batterie (9) zugewandten Seiten eine ebene Fläche ist.

3. Das Elektro-Fahrrad (100) gemäß irgendeinem der Ansprüche 1 oder 2, **dadurch gekennzeichnet, dass** zumindest ein Teil einer Querschnittsform des ersten Verlängerungsteils (134) und des zweiten Verlängerungsteils (135) in einem Schnitt orthogonal zur Erstreckungsrichtung des ersten Verlängerungsteils (134) und des zweiten Verlängerungsteils (135) eine rechteckige Form ist, und eine Richtung, in der sich eine kurze Seite der rechteckigen Form erstreckt, die Breitenrichtung des Fahrzeugkörpers ist.

4. Das Elektro-Fahrrad (100) gemäß Anspruch 1, **dadurch gekennzeichnet, dass** das erste Lagerteil (210) und das zweite Lagerteil (220) die Batterie (9) lagern, so dass zwischen dem ersten Verlängerungsteil (134)/dem zweiten Verlängerungsteil (135) und der Batterie (9) in Breitenrichtung des Fahrzeugkörpers Lücken (G) gebildet werden.

5. Das Elektro-Fahrrad (100) gemäß Anspruch 4, **gekennzeichnet durch**:
ein stoßdämpfendes Element (50), das in den Lücken (G) vorgesehen ist.

6. Das Elektro-Fahrrad (100) gemäß Anspruch 1, **dadurch gekennzeichnet, dass** das erste Lagerteil (210) und das zweite Lagerteil (220) die Batterie (9) lagern, so dass das erste Verlängerungsteil (134) und das zweite Verlängerungsteil (135) zumindest einen Teil der Batterie (9) in der Breitenrichtung des Fahrzeugkörpers berühren.

7. Das Elektro-Fahrrad (100) gemäß irgendeinem der Ansprüche 1 bis 6, **gekennzeichnet durch**:
ein Abdeckelement (90), das eine Oberfläche auf der Vorderseite der im Batteriegehäusebereich (R) angeordneten Batterie (9) abdeckt.

8. Das Elektro-Fahrrad (100) gemäß irgendeinem der Ansprüche 1 bis 7, **dadurch gekennzeichnet, dass** die Batterie (9) im Batterieaufnahmebereich (R) angeordnet ist, indem sie von einer Vorderseite des Fahrzeugkörpers aus zwischen das erste Verlängerungsteil (134) und das zweite Verlängerungsteil (135) eingesetzt ist.

9. Das Elektro-Fahrrad (100) nach einem der Ansprüche 1 bis 8, **gekennzeichnet durch**:
eine Kurbelwelle (62); und
Pedale (7), welche die Kurbelwelle (62) drehen,
wobei die Batterie (9) in dem Batteriegehäusebereich (R) angeordnet ist, so dass zumindest ein Teil davon auf einer unteren Seite als ein oberes Ende in einer vertikalen Richtung einer Drehspur (T) des Pedals (7) in Seitenansicht des Fahrzeugkörpers positioniert ist.

10. Das Elektro-Fahrrad (100) gemäß Anspruch 9, **dadurch gekennzeichnet, dass** die Batterie (9) im Bereich des Batteriegehäuses (R) angeordnet ist, so dass sie sich in der Seitenansicht des Fahrzeugkörpers zumindest teilweise mit der Drehspur (T) des Pedals (7) überlappt.

## Revendications

1. Bicyclette électrique (100) comprenant:
une roue avant (2);
une roue arrière (3);
une unité d'entraînement (8) configurée pour transmettre une force d'entraînement à au moins l'une des roues, roue avant (2) ou roue arrière (3);
une zone de logement de batterie (R) capable de loger une batterie (9) configurée pour fournir de l'énergie à l'unité d'entraînement (8);
un tube de tête (11); et
un cadre inférieur (13) s'étendant depuis le tube de tête (11) vers une direction arrière diagonalement inférieure d'une carrosserie de véhicule,
dans lequel le cadre inférieur (13) comprend une première partie d'extension (134) s'étendant vers la direction arrière diagonalement inférieure de la carrosserie du véhicule et une seconde partie d'extension (135) s'étendant vers la direction arrière diagonalement inférieure de la carrosserie du véhicule et
prévue côte à côte avec la première partie d'extension (134) dans une direction de largeur de la carrosserie du véhicule, et
la zone de logement de batterie (R) est formée au moins entre la première partie d'extension (134) et la seconde partie d'extension (135), dans laquelle la batterie (9) a une forme s'étendant dans la direction d'extension de la première partie d'extension (134) et de la seconde partie d'extension (135) et la bicyclette électrique (100) comprend une première partie de support (210) supportant un côté d'extrémité dans la direction d'extension de la batterie (9) et une seconde partie de support (220) supportant l'autre côté d'extrémité dans la direction d'extension de la batterie (9) dans lequel l'une quelconque de la première partie de support (210) et de la seconde partie de support (220) supporte la batterie (9) de manière à pouvoir tourner autour d'un axe (C1) s'étendant dans le sens de la largeur de la carrosserie du véhicule entre une position où la batterie (9) est disposée dans la zone de logement de la batterie (R) et une position où la batterie (9) est détachée de la zone de logement de la batterie (R), dans lequel la batterie (9) a une forme s'étendant dans la direction d'extension de la première partie d'extension (134) et de la seconde partie d'extension (135) avec une première largeur (W1) et une seconde largeur (W2), et est agencée dans la zone de logement de batterie (R) de sorte qu'une direction de la première largeur (W1) est parallèle à la direction de largeur de la carrosserie du véhicule, dans lequel les largeurs de la première partie d'extension (134) et de la seconde partie d'extension (135) sont plus étroites que la seconde largeur (W2) dans une vue latérale de la carrosserie du véhicule, et
que le cadre inférieur (13) comprend une base (131) reliée au tube (11), une première partie de connexion (132) reliant la base (131) à la première partie d'extension (134) et une seconde partie de connexion (133) reliant la base (131) à la seconde partie d'extension (135), et
la première partie de connexion (132) et la seconde partie de connexion (133) ont une extension dans la direction de la largeur de la carrosserie du véhicule de manière à être séparées l'une de l'autre
et dans lequel la largeur (F2) de la surface extérieure (134a) et de la surface intérieure (134b) de la première partie d'extension et de la surface intérieure (135b) et de la surface extérieure (135b) de la seconde partie d'extension (135) est plus étroite que la seconde largeur (W2) de la batterie (9) dans une vue latérale de la carrosserie du véhicule, et en ce qu'un connecteur d'alimentation en énergie (91) prévu sur la batterie (9) est d'abord connecté électriquement à un connecteur de réception d'énergie prévu dans l'une de la première partie de support (210) ou de la seconde partie de support (220) et après cela, la batterie (9) tourne autour de l'axe (C1) dans un état où elle est supportée par l'une de la première partie de support (210) ou avec la seconde partie de support (220) jusqu'à la position où la batterie (9) est disposée dans la zone de logement de batterie (R) avec la batterie (9) supportée sur ladite partie de support (210, 220),
**caractérisé en ce que** la seconde largeur (W2) est plus large que la première largeur (W1) de la batterie (9) et **en ce que** la forme en section transversale de la première partie d'extension (134) et de la seconde partie d'extension (135) dans une direction orthogonale à la direction d'extension de la première partie d'extension (134) et de la seconde partie d'extension (135) est une forme circulaire ou une forme ovale.

2. Bicyclette électrique (100) selon la revendication 1, **caractérisée en ce que**, dans la partie d'extension (134) et la seconde partie d'extension (135), au moins une partie des surfaces (134b, 135b) sur les côtés faisant face à la batterie (9) disposée dans la zone de logement de la batterie est une surface plate.

3. Bicyclette électrique (100) selon l'une quelconque des revendications 1 ou 2, **caractérisée en ce qu'**au moins une partie d'une forme de section transversale de la première partie d'extension (134) et de la seconde partie d'extension (135) dans une section orthogonale à la direction d'extension de la première partie d'extension (134) et de la seconde partie d'extension (135) est de forme rectangulaire, et une direction dans laquelle un petit côté de la forme rectangulaire s'étend est la direction de la largeur de la carrosserie du véhicule.

4. Bicyclette électrique (100) selon la revendication 1, **caractérisée en ce que** la première partie de support (210) et la seconde partie de support (220) supportent la batterie (9) de sorte que des espaces (G) sont formés entre la première partie d'extension (134)/la seconde partie d'extension (135) et la batterie (9) dans la direction de la largeur de la carrosserie du véhicule.

5. Bicyclette électrique (100) selon la revendication 4, **caractérisée par** un élément amortisseur (50) prévu dans les espaces (G).

6. Bicyclette électrique (100) selon la revendication 1, **caractérisée en ce que** la première partie de support (210) et la seconde partie de support (220) supportent la batterie (9) de sorte que la première partie d'extension (134) et la seconde partie d'extension (135) entrent en contact avec au moins une partie de la batterie (9) dans le sens de la largeur de la carrosserie du véhicule.

7. Bicyclette électrique (100) selon l'une quelconque des revendications 1 à 6, **caractérisée par** un élément de couverture (90) couvrant une surface sur le côté avant de la batterie (9) agencée dans la zone de logement de la batterie (R).

8. Bicyclette électrique (100) selon l'une quelconque des revendications 1 à 7, **caractérisée en ce que** la batterie (9) est disposée dans la zone de logement de batterie (R) en étant insérée entre la première partie d'extension (134) et la seconde partie d'extension (135) depuis un côté avant de la carrosserie du véhicule.

9. Bicyclette électrique (100) selon l'une quelconque des revendications 1 à 8, **caractérisée par**:
un vilebrequin (62); et
des pédales (7) assurant la rotation du vilebrequin (62),
dans laquelle la batterie (9) est disposée dans la zone de logement de la batterie (R) de sorte qu'au moins une partie de celle-ci est positionnée sur un côté inférieur qu'une extrémité supérieure dans une direction verticale d'une trace de rotation (T) de la pédale (7) en vue latérale de la carrosserie du véhicule.

10. Bicyclette électrique (100) selon la revendication 9, **caractérisée en ce que** la batterie (9) est disposée dans la zone de logement de la batterie (R) de sorte qu'au moins une partie de celle-ci chevauche la trace de rotation (T) de la pédale (7) en vue latérale de la carrosserie du véhicule.
